Europäisches Patentamt

European Patent Office

Office européen des brevets

(19)

(11) Numéro de publication: **0 286 763**

**A1**

(12) # DEMANDE DE BREVET EUROPEEN

(21) Numéro de dépôt: **87420278.1**

(22) Date de dépôt: **16.10.87**

(51) Int. Cl.⁴: **A41B 13/02 , C08L 53/00**

---

Le titre de l'invention a été modifié (Directives relatives à l'examen pratiqué à l'OEB. A-III, 7.3)

(30) Priorité: **18.02.87 FR 8702431**

(43) Date de publication de la demande:
**19.10.88 Bulletin 88/42**

(84) Etats contractants désignés:
**AT BE CH DE ES FR GB GR IT LI LU NL SE**

(71) Demandeur: **PLYMOUTH FRANCAISE**
**21 allée du Rhône**
**F-69320 Feyzin(FR)**

(72) Inventeur: **Touron, Jean-Claude**
**33 bis, rue des Granges**
**F-69005 Lyon(FR)**
Inventeur: **Bui Duc, Hao**
**24, rue Bonnet**
**F-69100 Villeurbanne(FR)**
Inventeur: **Dusza, Lionel**
**8, rue de l'Ancienne Cure**
**F-01800 Meximieux(FR)**

(74) Mandataire: **Maureau, Philippe et al**
**Cabinet Germain & Maureau Le Britannia -**
**Tour C 20, bld Eugène Déruelle Boîte**
**Postale 3011**
**F-69392 Lyon Cédex 03(FR)**

---

(54) **Matériau élastique destiné à la fabrication de feuilles pour l'industrie de la confection.**

(57) Ce matériau comprend un mélange de copolymères séquencés styrène-oléfine, de type SEBS : styrène-éthylène-butylène-styrène, de polymères thermoplastiques, de plastifiants, d'agents de mise en oeuvre et de protection.

Application à l'équipement d'articles de confection devant posséder des propriétés élastiques.

EP 0 286 763 A1

# MATERIAU ELASTIQUE DESTINE A LA FABRICATION DE FEUILLE POUR L'INDUSTRIE DE LA CONFECTION OU SIMILAIRE

La présente invention a pour objet un matériau élastique destiné à la fabrication de feuille pour l'industrie de la confection ou similaire.

Ce matériau en feuille peut être utilement mis en oeuvre par exemple pour :

-la réalisation de rubans élastiques destinés aux articles d'hygiène. d'habillement et de confection en général (literie, bagages, etc...),

-l'utilisation de feuilles minces pour la réalisation d'articles d'hygiène.

-la réalisation de complexes souples mettant en oeuvre des produits textiles ou similaires et des feuilles du matériau considéré.

Il est nécessaire d'avoir des rubans élastiques, pour l'équipement de vêtements, de sous-vêtements ou encore de changes jetables pour les jeunes enfants et pour les adultes incontinents.

Pour donner à ces changes une forme anatomique et assurer la contention nécessaire pour retenir les fuites d'urine et de déjections, il est nécessaire d'incorporer, dans ces produits, des éléments élastiques généralement sous forme de rubans appelés "laminettes".

Ce ruban élastique doit satisfaire, outre la mise en forme et la contention à un certain nombre d'autres critères notamment être un produit non toxique, non allergique et satisfaire à des tests de relaxation et de fluage couramment mis en oeuvre dans la profession, sans oublier l'aptitude à la fixation généralement par collage à chaud.

Pour remplir cette fonction élastique, plusieurs types de produits sont actuellement utilisés, ces produits se présentant sous forme de rubans, de section rectangulaire, carrée ou circulaire. Ces produits sont généralement à base de caoutchouc naturel, de polyuréthane, de polyétherester, ou encore, mais de façon moins courante, à base de mousse de polyuréthane, d'aggloméré de fils de type polyéther-polyurée ou de mèches de coton retordu.

Le caoutchouc naturel est le plus ancien de matériaux utilisés pour remplir cette fonction. Il présente l'avantage de posséder de bonnes qualités mécaniques, d'assurer une contention satisfaisante pour un coût de mise en oeuvre intéressant et de supporter le collage à chaud.

Cependant, il présente, pour l'utilisateur, des inconvénients et notamment : l'impossibilité d'être translucide, la présence d'un agent anti-collant nécessaire pour sa mise en oeuvre qu'il est difficile d'éliminer et qui gêne la pose de la colle. et la difficulté d'obtenir des épaisseurs inférieures à 15.100 de mm. empêchant la réalisation de rubans larges qui donneraient un confort supérieur à l'utilisateur, sans entraîner une augmentation importante du coût.

Pour le fabricant, le caoutchouc présente à plusieurs autres inconvénients :

-son coût est grevé par le non recyclage des pertes et rebuts,

-il est difficile d'approvisionner des caoutchoucs de latex de grande pureté, les impuretés provoquant des faiblesses dans les rubans. Il est donc délicat. dans ces conditions, d'obtenir une bonne qualité des rubans sans nuire au facteur de marche des lignes de production.

Les produits de synthèse à base thermoplastique possèdent, de façon générale, un mauvais comportement au collage à chaud, qui détruit leur élasticité et souffrent de caractéristiques mécaniques défavorables (hystérésis importante et relaxation dans le temps). Il en résulte un excès de consommation du produit puisqu'une partie de la matière inutilisée ne sert que pour la fixation et l'autre pour remplir les fonctions d'élasticité et de contention.

Le polyuréthane présente l'avantage de posséder une bonne régularité et une bonne résistance à la rupture, ne nécessite aucun lubrifiant ou agent anti-collant, mais présente les inconvénients d'une perte d'élasticité dans les zones subissant une élévation de température lors du collage. un manque de rigidité dans le sens transversal du ruban et ne permet pas la réalisation de ruban multibrins.

En ce qui concerne les rubans en polyéther-polyester, ils présentent l'avantage de posséder une grande régularité et une résistance à la rupture très élevée, mais on l'inconvénient de voir leur élasticité détruite lors d'une élévation de température lors du collage et de présenter un diagramme d'hystérésis très défavorable.

Dans le cas particulier des rubans incorporés dans des articles à utilisation longue (telle que l'habillement), il est bien connu que les produits existants et notamment ceux en caoutchouc naturel, ne donnent pas satisfaction car ils perdent leurs propriétés élastiques à la chaleur, par exemple lors du séchage à l'air chaud ou lors du repassage d'un vêtement, ou encore sous l'effet du soleil ou d'agent de protection solaire. phénomène auxquels sont soumis les vêtements de plage et de loisirs.

Dans les articles d'hygiène. il est nécessaire de disposer pour les produits en feuille, outre des qualités d'innocuité. de l'étanchéité aux liquides : celle-ci est obtenue avec des films très minces de polyéthylène ; or, ce matériau ne présente pas une élasticité qui favoriserait une bonne adaptation de l'objet sur le corps de l'utilisateur. Cette inaptitude est actuellement compensée par l'ajout d'éléments élastiques comme cela se fait dans le change jetable pour la ceinture et les jambes.

Dans la réalisation de complexe souple, c'est-à-dire dans l'assemblage d'éléments souples tels que tissus, jersey, grille, non tissés avec des éléments en feuilles minces en nombres variés réalisés par collage, avec ou sans éléments d'addition, il est souvent difficile d'obtenir une élasticité du complexe réalisé. Généralement, les matériaux en feuille tels que les PVC souples n'ont pas ou peu d'élasticité et l'assemblage du complexe réduit encore celle-ci. Dans ce cas considéré, l'assemblage du matériau avec des supports souples particulièrement des jerseys peut donner des complexes souples ayant des qualités de protection, d'étanchéité et particulièrement l'aptitude à la stérilisation.

La présente invention vise à remédier à ces inconvénients en fournissant un matériau possédant une excellente résistance à la chaleur qui le place, par ses performances, entre le caoutchouc naturel et les matières thermoplastiques utilisées habituellement, sans posséder les inconvénients des catégories évoquées ci-dessus. Ce matériau possède, par ailleurs, des qualités équivalentes dans les autres domaines, étanchéité, résistance aux agents chimiques, etc... .

A cet effet, le matériau qu'elle concerne comprend un mélange de copolymères séquencés styrène-oléfine, de type SEBS : styrène, éthylène-butylène-styrène, de polymères thermoplastiques, de plastifiants, d'agents de mise en oeuvre et de protection.

Ce matériau possède les propriétés du caoutchouc naturel en ce qui concerne les qualités d'allongement et de module élevé avec une faible hystéréris, mais en bénéficiant de qualités complémentaires qui appartiennent généralement aux produits thermoplastiques, telles que translucide, aptitude au recyclage, meilleur comportement au vieillissement et inutilité d'un agent anti-collant.

Selon une première forme de réalisation, ce matériau possède la composition pondérale suivante :

-SEBS : 50 à 70 %
-Polymères thermoplastiques : 5 à 25 %
-Plastifiants : 10 à 20 %
-Agents de mise en oeuvre : moins de 5 %.

Avantageusement, les polymères thermoplastiques sont choisis parmi les :

-copolymères polychlorure de vinyle, éthylène-vinyl-acétate,
-éthylène vinyl-acétate,
-polyesters.

Selon une autre caractéristique de l'invention, les plastifiants sont choisis parmi les huiles paraffiniques.

Conformément à une forme de réalisation, ce matériau comprend, en outre, des élastomères de synthèse et un produit de couplage appartenant par exemple, à la famille des silanes.

Les élastomères de synthèse sont choisis parmi les butyls, caoutchoucs nitriles, caoutchoucs de synthèse de type SBR (Styrène-Butylène-Rubber) ou copolymères d'éthylène propylène.

Le produit de couplage permet une réticulation plus ou moins importante, sans empêcher le recyclage du produit.

Il est possible de mettre en oeuvre ce matériau par calandrage, par extrusion soufflage, par extrusion cast film et même par extrusion de fil et filament, pour obtenir des feuilles, des rubans, ou des fils. Il est bien certain que la fabrication de fil de section ronde ou autre n'est que la réalisation de ruban élastique adapté à une fabrication particulière.

Les feuilles peuvent être utilisées en l'état, en raison de leurs propriétés de "barrières" ou pour réaliser le complexage de tissu ou de non tissés pour toute industrie, et notamment lorsque les produits doivent être stérilisables. Une application particulière de feuilles consiste en la réalisation de panneaux d'étanchéité destinés à être incorporés dans des changes jetables, l'élasticité de la matière permettant de supprimer les élastiques au niveau des jambes et à la taille.

Les rubans et les fils mono ou multifilaments peuvent être utilisés dans la réalisation d'articles de confection, les propriétés du matériau leur permettant de bien résister au séchage à haute température, au repassage ou à des produits agressifs tels que des produits de protection solaire.

## Revendications

1. - Matériau élastique caractérisé en ce qu'il comprend un mélange de copolymères séquencés styrène-oléfine, de type SEBS : styrène-éthylène-butylène-styrène, de polymères thermoplastiques, de plastifiants, d'agents de mise en oeuvre et de protection.

2. - Matériau selon la revendication 1, caractérisé en ce qu'il possède la composition pondérale suivante :

-SEBS : 50 à 70 %
-Polymères thermoplastiques : 5 à 25 %
-Plastifiants : 10 à 20 %
-Agents de mise en oeuvre : moins de 5 %.

3. - Matériau selon l'une quelconque des revendications 1 et 2, caractérisé en ce que les polymères thermoplastiques sont choisis parmi les :

-polyoléfines

-copolymères polychlorure de vinyle, éthylène-vinyl-acétate

-éthylène vinyl-acétate,

-polyesters (dont les polyuréthanes).

4. - Matériau selon l'une quelconque des revendications 1 et 2, caractérisé en ce que les plastifiants sont choisis parmi les huiles paraffiniques.

5. - Matériau selon l'une quelconque des revendications 1 à 4, caractérisé en ce qu'il comprend, en outre, des polymères de synthèse réticulables (tels les élastomères) et un système de couplage.

6. - Matériau selon la revendication 5, caractérisé en ce que le système de couplage appartient à la famille des silanes.

7. - Matériau selon la revendication 5, caractérisé en ce que les polymères de synthèse sont choisis parmi les butyls, caoutchoucs nitriles, caoutchoucs de synthèse de type SBR (Styrène-Butylène-Rubber) ou copolymères d'éthylène propylène.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 386 179 (R.E. STERLING) <br> * Résumé * <br> --- | 1-7 | A 41 B 13/02 <br> C 08 L 53/00 |
| X | EP-A-0 056 005 (EXXON RESEARCH) <br> * Résumé * <br> --- | 1-7 | |
| X | GB-A-2 008 140 (BAXTER TRAVENOL) <br> * Résumé * <br> ----- | 1-7 | |

DOMAINES TECHNIQUES RECHERCHES (Int. Cl.4)

A 41 B
C 08 L

Le présent rapport a été établi pour toutes les revendications

| Lieu de la recherche | Date d'achèvement de la recherche | Examinateur |
|---|---|---|
| LA HAYE | 31-05-1988 | GOOVAERTS R.E. |

EPO FORM 1503 03.82 (P0402)